**Europäisches Patentamt**

**European Patent Office**

**Office européen des brevets**

(19)

(11) Veröffentlichungsnummer: **0 163 329**
**B1**

(12) **EUROPÄISCHE PATENTSCHRIFT**

(45) Veröffentlichungstag der Patentschrift:
22.03.89

(51) Int. Cl.⁴: **G 11 B 15/14, G 11 B 5/53**

(21) Anmeldenummer: **85200614.7**

(22) Anmeldetag: **19.04.85**

(54) **Trommelförmige Abtasteinheit für ein Aufzeichnungs- und/oder Wiedergabegerät und Verfahren zur Anordnung einer Transformatorscheibe eines zweiteiligen Ringtransformators an einer Trommelscheibe einer trommelförmigen Abtasteinheit.**

(30) Priorität: **30.04.84 AT 1434/84**

(43) Veröffentlichungstag der Anmeldung:
**04.12.85 Patentblatt 85/49**

(45) Bekanntmachung des Hinweises auf die Patenterteilung:
**22.03.89 Patentblatt 89/12**

(84) Benannte Vertragsstaaten:
**DE FR GB**

(56) Entgegenhaltungen:
**EP-A- 0 023 067**
**GB-A- 2 134 308**
**US-A- 3 867 725**

**PATENT ABSTRACTS OF JAPAN, Band 7, Nr. 251, 08. November 1983, Seite (E-209) (1396); & JP-A-58-138011**
**PATENT ABSTRACTS OF JAPAN, Band 6, Nr. 247, 07. Dezember 1982, Seite (E-146) (1145); & JP-A-57-145306**

(73) Patentinhaber: **N.V. Philips' Gloeilampenfabrieken, Groenewoudseweg 1, NL-5621 BA Eindhoven (NL)**

(72) Erfinder: **Kabacinski, Mariusz, p/A INT. OCTROOIBUREAU B.V. Prof. Holstlaan 6, NL-5656 AA Eindhoven (NL)**

(74) Vertreter: **Schrijnemaekers, Hubert Joannes Maria et al, Internationaal Octrooibureau B.V. Prof. Holstlaan 6, NL-5656 AA Eindhoven (NL)**

## Beschreibung

Die Erfindung betrifft eine trommelförmige Abtasteinheit für ein Aufzeichnungs- und/oder Wiedergabegerät, über deren Mantelfläche über einen vorgegebenen Winkelbereich ein bandförmiger Aufzeichnungsträger schlingbar ist und die mindestens eine stillstehende und eine koaxiale, rotierend antreibbare Trommelscheibe und einen zweiteiligen Ringtransformator aufweist, der durch zwei aus Ferritmaterial bestehende und mindestens eine Transformatorwicklung tragende Transformatorscheiben gebildet ist, die mit Abstand zwischen ihren Scheibenhauptflächen einander gegenüberliegend einerseits an der rotierend antreibbaren Trommelscheibe und andererseits der dieser gegenüberliegenden stillstehenden Trommelscheibe koaxial angeordnet sind, wobei mindestens eine der beiden Trommelscheiben mit mindestens drei, einander gegenüber winkelversetzt angeordneten, achsparallelen Bohrungen versehen ist, die in je ein mit der betreffenden Transformatorscheibe in Verbindung stehender Träger für dieselbe eingesetzt ist. Eine derartige Abtasteinheit ist von im Handel unter der Typenbezeichnung VR 2220 befindlichen Aufzeichnungs- und/oder Wiedergabegeräten für Videosignale bekannt. Bei solchen Abtasteinheiten stellt die Art und Weise der Anordnung der Transformatorscheiben auf den Trommelscheiben ein besonderes Problem dar, weil der Abstand zwischen den einander gegenüberliegenden Scheibenhauptflächen der beiden Transformatorscheiben sehr klein sein soll, etwa in der Größenordnung von 0,05 mm, damit der Wirkungsgrad der Signalübertragung möglichst gut ist. Hierbei ist auch noch zu beachten, daß sich im Laufe des Betriebes durch unterschiedliche Betriebsbedingungen und Alterungserscheinungen keine unzulässigen Änderungen im Abstand zwischen den beiden Transformatorscheiben ergeben. Außerdem spielen auch noch Toleranzen eine wesentliche Rolle, da die Transformatorscheiben aus Ferritmaterial bestehen, das bei seiner Verarbeitung bekanntlich relativ große Toleranzen am fertigen Bauteil verursachen kann. Bisher hat man zur Anordnung der Transformatorscheiben an den Trommelscheiben Klebemethoden verwendet, die aber in der Fabrikation relativ aufwendig und kompliziert sind und auch Stabilitätsprobleme mit sich bringen. Bei der eingangs angeführten bekannten Abtasteinheit ist zur Anordnung einer Transformatorscheibe an einer Trommelscheibe vorgesehen, daß die Träger als zylindrische Stifte ausgebildet sind, die mit einer ihrer beiden Seitenflächen an der Transformatorscheibe angeklebt werden und die dann mit ihren freien Enden an die an der Trommelscheibe vorgesehenen Bohrungen eingesetzt und im Bereich ihrer Umfangsflächen innerhalb der Bohrungen festgeklebt werden, womit einige Klebevorgänge notwendig sind.

Die Erfindung hat sich zum Ziel gesetzt, eine Abtasteinheit der eingangs angeführten Gattung so auszugestalten, daß der Ringtransformator mit hoher Genauigkeit auf den Trommelscheiben der Abtasteinheit angeordnet werden kann, wobei auch eine stabile Verbindung erhalten wird und die Fabrikation möglichst einfach ist. Erfindungsgemäß ist hierzu vorgesehen, daß die Träger als aus einem schweißbaren Material bestehende, an einem Ende offene, topfförmige, mit ihrem bodenseitigen Ende aus der Trommelscheibe herausragende Hülsen ausgebildet sind, daß an der Transformatorscheibe, korrespondierend zu den Böden der Hülsen an der Trommelscheibe, Gegenflächen vorgesehen sind, die durch mindestens ein aus einem schweißbaren Material bestehendes, an der Transformatorscheibe angebrachtes Gegenstück gebildet sind und daß die Böden der Hülsen mit den zu ihnen korrespondierenden Gegenflächen verschweißt sind. Auf diese Weise kann eine Transformatorscheibe vorerst in ihre richtige Lage gegenüber einer Trommelscheibe gebracht und dann durch Schweißvorgänge endgültig mit dieser verbunden werden, wodurch Toleranzen ausgeglichen und hohe Genauigkeiten erreicht werden können. Weiters ist eine solche Verbindung in der Fabrikation gut beherrschbar und sie ergibt auch keine Änderungen unter verschiedenen Betriebsbedingungen und weist auch keine Alterungserscheinungen auf. Zur Herstellung der Schweißverbindungen können dabei im Rahmen des diesbezüglichen Standes der Technik bekannte Schweißverfahren verwendet werden.

Als sehr einfach hat sich erwiesen, wenn zur Bildung der Gegenflächen ein als Ring ausgebildetes Gegenstück an der Transformatorscheibe angebracht ist. Auf diese Weise ist nur ein Teil an der Transformatorscheibe zu befestigen, beispielsweise durch Kleben.

Es hat sich aber auch als vorteilhaft erwiesen, wenn zur Bildung jeder Gegenfläche ein eigenes, als Plättchen ausgebildetes Gegenstück an der Transformatorscheibe angebracht ist. Hierdurch kann die Lage der einzelnen Gegenstücke einfach entsprechend der gewünschten Anordnung der Hülsen an der Trommelscheibe gewählt werden.

Hinsichtlich der Anordnung der Hülsen an der Trommelscheibe bestehen verschiedene Möglichkeiten. Beispielsweise können die Hülsen in die Bohrungen an der Trommelscheibe eingepreßt oder eingeklebt oder mit der Trommelscheibe verlötet und verschweißt werden. Als besonders vorteilhaft hat sich jedoch erwiesen, wenn die Hülsen an ihrem offenen Ende mit einem Bund versehen und lose in die Bohrungen der Trommelscheibe eingesetzt sind, wobei sich ihr Bund von einer Seite her an der Trommelscheibe abstützt und die Hülsen ih ihrem aus der Trommelscheibe herausragenden Bereich mit einer wulstförmigen Stauchung versehen werden, die sich von der anderen Seite her an der Trommelscheibe abstützt und die Hülsen an der Trommelscheibe fixiert. Auf diese Weise wird eine sehr stabile Anordnung der Hülsen an der Trommelscheibe erhalten, ohne daß zusätzliche Mittel hierzu erforderlich sind. Weiters können im Zuge der Stauchungen auch noch Höhenausgleiche bei den aus der Trommelscheibe herausragenden Hülsen vorgenommen werden, wodurch noch eine genauere Anordnung einer Transformatorscheibe an einer Trommelscheibe möglich ist.

Für die Art und Weise der Stauchung bestehen verschiedene Möglichkeiten. Beispielsweise kann die Hülse in ihrem ganzen aus der Trommelscheibe herausragenden Bereich wulstförmig gestaucht werden, so daß dieser Bereich als Ganzes pilzförmig ausgebildet wird und sich dabei an der Seitenfläche der Trommel abstützt. Eine solche Stauchung läßt sich erreichen, wenn die Hülse eine einheitliche, relativ dünne Wandstärke aufweist und gegebenenfalls außerdem ihr Boden halbkugelförmig ausgebildet ist. Als besonders vorteilhaft hat sich aber erwiesen, wenn die umfangsseitige Wandung der Hülsen in ihrem aus der Trommelscheibe herausragenden Bereich gegenüber der anderen Wandung nach innen hin verstärkt ausgebildet ist. Auf diese Weise wird mit Sicherheit erreicht, daß die wulstförmige Stauchung nur unmittelbar im an die Trommelscheibe angrenzenden Bereich der Hülse erfolgt und sich dabei das gestauchte Material sehr gut an der Seitenfläche der Trommelscheibe abstützt und damit die Hülse sicher an der Trommelscheibe fixiert. Eine solche Art der Stauchung läßt sich in der Fabrikation gut und reproduzierbar beherrschen.

Die Erfindung betrifft weiters ein Verfahren zur Anordnung einer Transformatorscheibe eines zweiteiligen Ringtransformators an einer Trommelscheibe einer trommelförmigen Abtasteinheit. Wie bereits erwähnt, wurden im Zuge diesbezüglicher bekannter Verfahren bisher Klebemethoden verwendet, die sich aber als in der Fertigung schwierig und aufwendig erwiesen haben. Durch Kleben hergestellte Verbindungen zeigen vielfach auch Alterungserscheinungen und Veränderungen unter verschiedenen Betriebsbedingungen.

Zur Vermeidung dieser Schwierigkeiten ist bei einem erfindungsgemäßen Verfahren vorgesehen, daß

a) mindestens drei aus einem schweißbaren Material bestehende, an einem Ende offene, topfförmige Hülsen in einander gegenüber winkelversetzt angeordnete, achsparallele Bohrungen der Trommelscheibe eingesetzt werden, wobei die Hülsen mit ihrem bodenseitigen Ende auf der Seite der Trommelscheibe, an die die Transformatorscheibe angrenzen soll, aus der Trommelscheibe herausragen, daß

b) zur Bildung von Gegenflächen die den Böden der Hülsen an der Trommelscheibe korrespondierend zugeordnet sind, die Transformatorscheibe mit mindestens einem aus einem schweißbaren Material bestehendes Gegenstück versehen wird, daß

c) die Trommelscheibe und die Transformatorscheibe in eine Vorrichtung eingesetzt werden, in der die Böden der Hülsen den ihnen zugeordneten Gegenflächen an der Transformatorscheibe mit Abstand gegenüberliegen, und daß dann

d) die Böden der Hülsen mit den Gegenflächen mittels in die Hülsen von deren offenen Enden her in sie hineingerichteter Laserstrahlen miteinander verschweißt werden. Auf diese Weise ergibt sich ein einfacher Verfahrensablauf, der sich sehr gut für eine Serienfertigung in großen Stückzahlen eignet. Außerdem werden durch die Schweißvorgänge mit Laserstrahlen auf einfache Weise sichere und stabile Schweißverbindungen hergestellt, wobei durch die üblicherweise enge Bündelung der Laserstrahlen ihre Anwendung auch bei relativ kleinen Abmessungen der Hülsen keine Schwierigkeiten mit sich bringt. Auf diese Weise werden auch zentral liegende Schweißstellen erhalten, die ein besonders geringes Schrumpfen zeigen, was ebenfalls im Hinblick auf die gewünschte hohe Genauigkeit der Anordnung einer Transformatorscheibe an einer Trommelscheibe sehr wichtig ist.

Als besonders vorteilhaft hat sich erwiesen, wenn nach Durchführung der Verfahrensschritte a) und b) die Transformatorscheibe in eine Meßeinrichtung eingesetzt wird und die Höhen der einzelnen den Böden der Hülsen am Träger zugeordneten Gegenflächen gegenüber einer Bezugsebene gemessen werden und die Trommelscheibe ihrerseits in eine Vorrichtung eingesetzt wird, in der die Höhen der einzelnen aus ihr herausragenden Hülsen, korrespondierend zu den gemessenen Höhen der einzelnen Gegenflächen an der Transformatorscheibe, je auf ein an diese gemessenen Höhen der einzelnen Gegenflächen rechnerisch angepaßtes, gegenüber einer Bezugsebene festgelegtes Sollmaß gestaucht werden, wonach die Verfahrensschritte c) und d) durchgeführt werden. Auf diese Weise lassen sich besonders hohe Genauigkeiten hinsichtlich der Anordnung einer Transformatorscheibe an einer Trommelscheibe erreichen, wodurch weiters die beiden Transformatorscheiben eines Ringtransformators mit besonders geringem Abstand ihrer Scheibenhauptflächen einander gegenüber angeordnet werden können und so eine sehr gute Signalübertragung erreicht wird. Weiters wird hierdurch erreicht, daß die Abstände zwischen den Böden der Hülsen und den ihnen zugeordneten Gegenflächen an der Transformatorscheibe stets gleich groß sind, wodurch beim Verschweißen der Böden mit den Gegenflächen in reproduzierbarer Weise besonders stabile Verbindungen erhalten werden. Ein solches Verfahren ist auch sehr gut für einen vollständig automatisierten Ablauf der einzelnen Verfahrensschritte geeignet.

Die Erfindung wird im folgenden anhand der Zeichnungen näher erläutert, in welchen ein Ausführungsbeispiel der Erfindung dargestellt ist, auf welches sie jedoch nicht beschränkt sein soll, und mit welchen ein bevorzugtes Herstellungsverfahren erläutert wird.

Fig. 1 zeigt teilweise im Schnitt eine Abtasteinheit für ein Aufzeichnungs- und/oder Wiedergabegerät, bei der die beiden Transformatorscheiben eines Ringtransformators mittels Hülsen an den beiden Trommelscheiben der Abtasteinheit angeordnet sind.

Fig. 2 zeigt in vergrößertem Maßtab und im Schnitt eine der Verbindungsstellen einer Transformatorscheibe mit einer Trommelscheibe nach dem Ausführungsbeispiel gemäß Fig. 1.

Fig. 3 zeigt die Anordnung einer Transformatorscheibe und einer Trommelscheibe in einer Vorrichtung, die ihre gegenseitige Lage festlegt, in der dann durch Schweißen mit Laserstrahlen ihre gegenseitige Verbindung hergestellt wird.

Fig. 4 zeigt schematisch das Messen der Höhen der Gegenflächen an einer Transformatorscheibe und das an diese gemessenen Höhen rechnerisch angepaßte Stauchen der Hülsen an einer Trommelscheibe auf das errechnete Sollmaß.

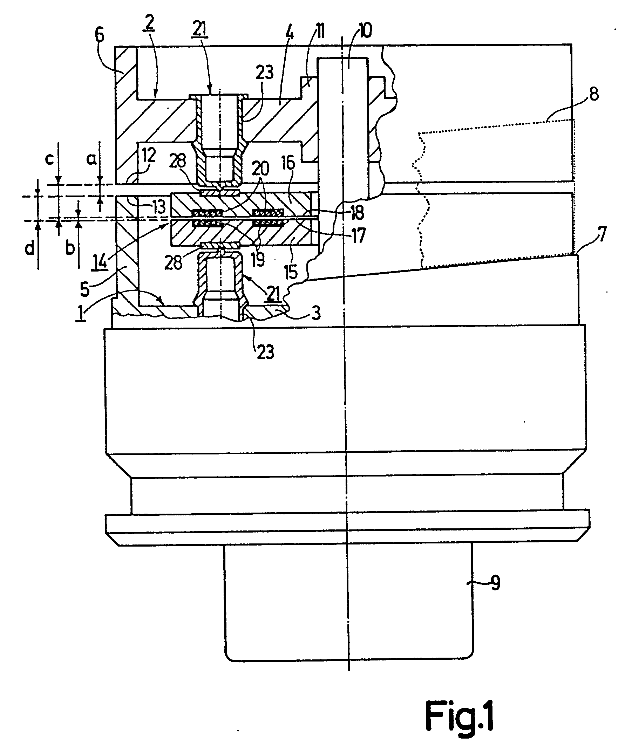

In Fig. 1 ist eine trommelförmige Abtasteinheit für ein Aufzeichnungs- und/oder Wiedergabegerät zum Aufzeichnen und/oder Wiedergeben von Videosignalen auf einem bandförmigen Aufzeichnungsträger dargestellt, die eine stillstehende Trommelscheibe 1 und eine koaxiale, rotierend antreibbare Trommelscheibe 2 aufweist. Diese Trommelscheiben 1 bzw. 2 sind in Form einer zentralen Trägerscheibe 3 bzw. 4, die umfangsseitig in einen zylindrischen Trommelkranz 5 bzw. 6 übergeht aufgebaut, wobei die Mantelflächen der beiden Trommelkränze gemeinsam die Mantelfläche der Abtasteinheit bilden, über die in einem vorgegebenen Winkelbereich ein bandförmiger Aufzeichnungsträger schraubenlinienförmig schlingbar ist. Hierbei läuft der Aufzeichnungsträger zum Teil über die Mantelfläche der stillstehenden Trommelscheibe 1 und zum Teil über diejenige der rotierend antreibbaren Trommelscheibe 2, wobei zu seiner exakten Führung an der Trommelscheibe 2, wobei zu seiner exakten Führung an der Trommelscheibe 1 eine Rampe 7 vorgesehen ist, an der sich der Aufzeichnungsträger mit einer seiner beiden Kanten abstützt. In Fig. 1 ist ein Abschnitt eines solchen Aufzeichnungsträgers 8 schematisch mit punktierten Linien angedeutet.

Mit der stillstehenden Trommelscheibe 1 ist ein Motor 9 verbunden, der eine Antriebswelle 10 aufweist, auf welche die Trommelscheibe 2 mit einer Nabe 11 aufgesetzt ist, so daß sie vom Motor 9 her rotierend antreibbar ist. Die Lage der Trommelscheibe 2 auf der Welle 10 ist dabei so gewählt, daß die der Trommelscheibe 1 zugewandte Begrenzungsfläche 12 ihres Trommelkranzes 6 im Abstand a von der Begrenzungsfläche 13 des Trommelkranzes 5 der Trommelscheibe 1 verläuft, wodurch zwischen den beiden Trommelscheiben 1 und 2 ein Spalt gebildet ist, dessen Abmessung beispielsweise in der Größenordnung von 0,1 mm liegt. Dieser Spalt ist dazu vorgesehen, daß auf der rotierend antreibbaren Trommelscheibe 2 angeordnete, hier nicht dargestellte Abtastelemente, wie beispielsweise Magnetköpfe, mit dem Aufzeichnungsträger 8 in Wirkverbindung treten können, wobei sie dann nebeneinander liegende, schräge Spuren am Aufzeichnungsträger abtasten, um so eine Aufzeichnung bzw. Wiedergabe von Signalen zu bewirken.

Um aufzuzeichnende Signale den zusammen mit der Trommelscheibe 2 rotierenden Abtastelementen zuführen zu können bzw. bei einer Wiedergabe von den Abtastelementen erzeugte Signale wieder abführen zu können oder auch andere Steuersignale zur rotierenden Trommelscheibe 2 übertragen zu können, ist in üblicher Weise ein zweiteiliger Ringtransformator 14 vorgesehen, der durch zwei aus Ferritmaterial bestehende Transformatorscheiben 15 und 16 gebildet ist. Die Transformatorscheibe 15 steht hierbei mit der Trommelscheibe 1 und die Transformatorscheibe 16 mit der Trommelscheibe 2 in Verbindung, wobei durch zentrale Öffnungen in den beiden Transformatorscheiben 15 und 16 die Antriebswelle 10 des Motors 9 hindurchragt. Die beiden Transformatorscheiben 15 und 16 sind je für sich so angeordnet, daß zwei ihrer Scheibenhauptflächen 17 und 18 im Abstand b einander gegenüberliegen. Ebenfalls einander gegenüberliegend sind die beiden Transformatorscheiben 15 und 16 mit Ringnuten 19 bzw. 20 versehen, in welchen Transformatorwicklungen untergebracht sind, wobei jeweils einander gegenüberliegende Transformatorwicklungen miteinander zur Signalübertragung zusammenwirken; beim vorliegenden Ausführungsbeispiel ist angenommen, daß beispielsweise zwei Signale übertragen werden sollen. Damit die Signalübertragung in einem solchen Ringtransformator 14 mit gutem Wirkungsgrad erfolgt, ist es erforderlich, daß der Abstand b zwischen den beiden Scheibenhauptflächen 17 und 18 der beiden Trommelscheiben 15 und 16 möglichst gering ist, beispielsweise etwa in der Größenordnung von 0,05 mm oder wünschenswerterweise noch weniger. Dies bedeutet aber, daß die Anordnung der Transformatorscheiben auf den Trommelscheiben mit möglichst hoher Genauigkeit erfolgen muß, damit nach dem Zusammenfügen der beiden Trommelscheiben zur Bildung der gesamten Abtasteinheit, was ebenfalls unter Einhaltung hoher Genauigkeitsanforderungen zu geschehen hat, der gewünschte geringe Abstand zwischen den beiden Scheibenhauptflächen 17 und 18 der beiden Trommelscheiben 15 und 16 erreicht wird. Die Anordnung der Transformatorscheiben auf den Trommelscheiben muß dabei sehr stabil sein, damit sich im Laufe des Betriebes im Hinblick auf den geringen Abstand der Scheibenhauptflächen 17 und 18 voneinander, keine Änderungen hinsichtlich der gegenseitigen Lage der beiden Transformatorscheiben ergeben, die diesen Abstand in unzulässiger Weise verändern könnten.

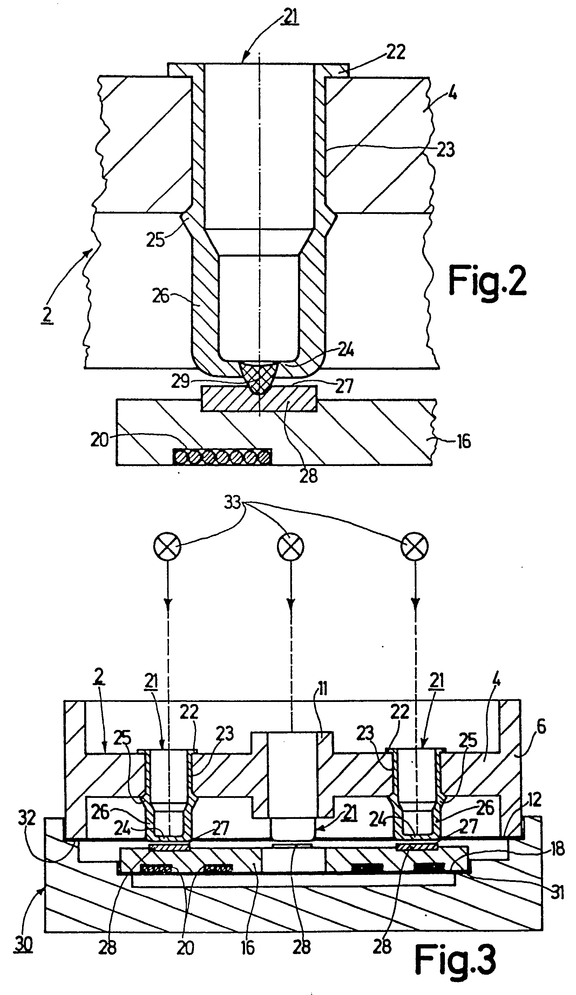

Im folgenden wird eine erfindungsgemäße Anordnung einer Transformatorscheibe an einer Trommelscheibe im Zusammenhang mit der Anordnung der Transformatorscheibe 16 an der Trommelscheibe 2 beschrieben. Die Transformatorscheibe 15 kann in analoger Weise auf der Trommelscheibe 1 angeordnet werden, wobei es aber nicht zwingend notwendig ist, daß beide Transformatorscheiben in der gleichen Art und Weise auf der zugehörigen Trommelscheibe angeordnet werden. Die Anordnung der Transformatorscheibe 16 an der Trommelscheibe 2 erfolgt mit Hilfe von vier Trägern, die ihrerseits winkelversetzt an der Trommelscheibe 2 angeordnet sind, wobei in Fig. 1 nur ein solcher Träger sichtbar ist. Jeder dieser Träger, siehe hierzu auch Fig. 2, ist als aus einem schweißbaren Material bestehende, an einem Ende offene, topfförmige Hülse 21 ausgebildet, die im ursprünglichen Zustand eine zylindrische äußere Mantelfläche hat. An ihrem offenen Ende sind die Hülsen 21 mit einem Bund 22 versehen. Diese Hülsen werden in einander gegenüber winkelversetzt angeordnete, achsparallele Bohrungen 23 der Trommelscheibe 2 eingesetzt, wobei sich ihr Bund 22 von einer Seite her an der Trommelscheibe abstützt und ihr bodenseitiges Ende 24 auf der Seite der Trommelscheibe 2, an die die Transformatorscheibe 16 angrenzen soll, aus der Trommelscheibe herausragt. Die derart in die Trommelscheibe eingesetzten Hülsen 21 werden in ihrem aus der Trommelscheibe herausragenden Bereich mit einer wulstförmigen Stauchung 25 versehen, die sich, dem Bund 22 gegenüber gesehen, von der anderen Seite her an der Trommelscheibe abstützt. Eine solche Stauchung wird dadurch erreicht, daß bei Abstützung des Bundes 22, vom bodenseitigen Ende 24 her auf die Hülse ein Druck ausgeübt wird. Auf diese Weise ist jede der Hülsen 21 durch das Zusammenwirken ihres Bundes 22 und ihrer wulstförmigen Stauchung 25 mit der Trommelscheibe 2 an derselben durch Klemmung fixiert. Die umfangsseitige Wandung der Hülsen 21 ist in ihrem aus der Trommelscheibe herausragenden Bereich 26 gegenüber der anderen Wandung nach innen hin verstärkt ausgebildet, wodurch erreicht wird, daß die wulstförmige Stauchung 25 nur unmittelbar im an die Trommelscheibe angrenzenden Bereich der Hülse erfolgt und sich dabei das gestauchte Material einwandfrei an der Seitenfläche der Trommelscheibe abstützt und damit die Hülse sicher an der Trommelscheibe fixiert. Durch eine abgeschrägte Kante des Randes der Bohrungen 23 kann der Sitz für die Stauchungen 25 noch weiter verbessert werden.

An der Transformatorscheibe sind, korrespondierend zu den Böden 24 der Hülsen 21 an der Trommelscheibe 2, Gegenflächen 27 vorgesehen, die beim vorliegenden Ausführungsbeispiel durch je ein aus einem schweißbaren Material bestehendes, an der Transformatorscheibe angebrachtes Gegenstück 28 gebildet sind, wobei diese Gegenstücke 28 hier als Plättchen ausgeführt sind; beispielsweise könnten die Gegenstücke aber auch tellerförmig ausgebildet sein. Die Anbringung dieser Gegenstücke an der Transformatorscheibe kann durch Kleben erfolgen oder auf andere Weise, wie beispielsweise dadurch, daß die Gegenstücke unmittelbar beim Sintervorgang der aus Ferritmaterial bestehenden Transformatorscheibe in diese eingebettet und dadurch mit ihr verbunden werden.

Mit Hilfe einer Vorrichtung, in welche die mit den Gegenstücken 28 versehene Transformatorscheibe 16 und die mit den Hülsen 21 versehene Trommelscheibe 2 eingesetzt werden, werden die Transformatorscheibe und die Trommelscheibe in die gewünschte gegenseitige Lage gebracht, in der die Gegenflächen 27 der Gegenstücke 28 in korrespondierender Weise den Böden 24 der Hülsen 21 gegenüberliegen. In dieser gegenseitigen Lage der Transformatorscheibe 16 gegenüber der Trommelscheibe 2 werden dann die Böden 24 der Hülsen 21 mit den Gegenflächen 27 der Gegenstücke 28 verschweißt, wie dies in Fig. 2 durch die Schweißstelle 29 angedeutet ist. Durch einen solchen Schweißvorgang, der nach zum Stande der Technik zählenden Schweißverfahren durchgeführt werden kann, beispielsweise durch elektrische Widerstandsschweißung, werden sichere und stabile Verbindungen zwischen den Böden 24 der Hülsen 21 und den Gegenstücken 28 hergestellt, wodurch die Transformatorscheibe 16 lagerichtig und exakt an der Trommelscheibe 2 angeordnet ist.

Als besonders vorteilhaft hat sich erwiesen, wenn die mit den Gegenstücken 28 versehene Transformatorscheibe 16 und die mit den Hülsen 21 versehene Trommelscheibe 2 in eine derart ausgebildete Vorrichtung eingesetzt werden, daß die Böden 24 der Hülsen 21 den ihnen zugeordneten Gegenflächen 27 der Gegenstücke 28 an der Transformatorscheibe 16 mit Abstand gegenüberliegen, wonach dann die Böden 24 der Hülsen 21 mit den Gegenflächen 27 der Gegenstücke 28 mittels in die Hülsen von deren offenen Enden her in sie hineingerichteter Laserstrahlen miteinander verschweißt werden. In Fig. 3 ist eine solche schematisch dargestellte Vorrichtung mit 30 bezeichnet. Sie ist scheibenförmig ausgebildet und weist eine erste zylindrische Absetzung 31 zum Auflegen der Transformatorscheibe 16 und eine zweite zylindrische Absetzung 32 zum Auflegen der Transformatorscheibe 2 auf, wobei die Transformatorscheibe und die Trommelscheibe so in die Vorrichtung eingesetzt werden, daß die Gegenflächen 27 der Gegenstücke 28 an der Transformatorscheibe den Böden 24 der Hülsen 21 an der Trommelscheibe einander gegenüberliegen. Die Absetzungen 31 und 32 an der Vorrichtung 30, die auch die richtige koaxiale Lage der Transformatorscheibe gegenüber der Trommelscheibe festlegt, sind dabei so höhenmäßig gegeneinander angeordnet, daß zwischen den Gegenflächen 27 und den Böden 24 ein Abstand besteht. Zufolge dieses Abstandes kann die gegenseitige Lage von Transformatorscheibe und Trommelscheibe sehr genau festgelegt werden, da dabei allfällige Toleranzen in axialer Richtung zum Ausgleich kommen. Durch die mit 33 schematisch angedeuteten Laserstrahlenquellen werden dann Laserstrahlen in die Hülsen von deren offenen Enden her in sie hineingerichtet, die auf den Böden 24 der Hülsen auftreffen und den Schweißvorgang bewirken, wobei die Böden 24 unter Überbrückung des sich zwischen ihnen und den Gegenflächen 27 der Gegenstücke 28 befindlichen Abstandes miteinander verschweißt werden, wie dies auch aus Fig. 2 ersichtlich ist. Zweckmäßigerweise werden die Böden 24 aller Hülsen 21 gleichzeitig mit den ihnen zugeordneten Gegenflächen 27 der Gegenstücke 28 verschweißt, wodurch die gewünschte gegenseitige Lage der Transformatorscheibe 16 gegenüber der Trommelscheibe 2 besonders sicher und verspannungsfrei eingehalten wird. Der Abstand, der zwischen den Böden 24 der Hülsen 21 und den Gegenflächen 27 der Gegenstücke 28 vorzusehen ist, richtet sich unter anderem nach den miteinander zu verschweißenden Materialien und der Dikke der Böden 24 der Hülsen 21, wobei Werte zwischen einigen tausendstel und einigen zehntel Millimeter gewählt werden können. Als Materialien für die Hülsen 21 und Gegenstücke 28 haben sich als sehr zweckmäßig Kupfer-Nickel-Legierungen erwiesen, wobei aber die beiden Teile nicht zwingend aus dem gleichen Material bestehen müssen. Es hat sich gezeigt, daß die mit Laserstrahlen hergestellten Schweißverbindungen besonders sicher und stabil sind, wobei beim Schweißvorgang nur ein sehr geringes Schrumpfen eintritt, da die Schweißstellen zentral im Boden der Hülsen liegen, was für die angestrebten hohen Genauigkeiten ebenfalls sehr wichtig ist. Insgesamt wird daher durch die Art und Weise der Verbindungen eine sehr genaue Lage der Transformatorscheibe 16 gegenüber der Trommelscheibe 2 erreicht.

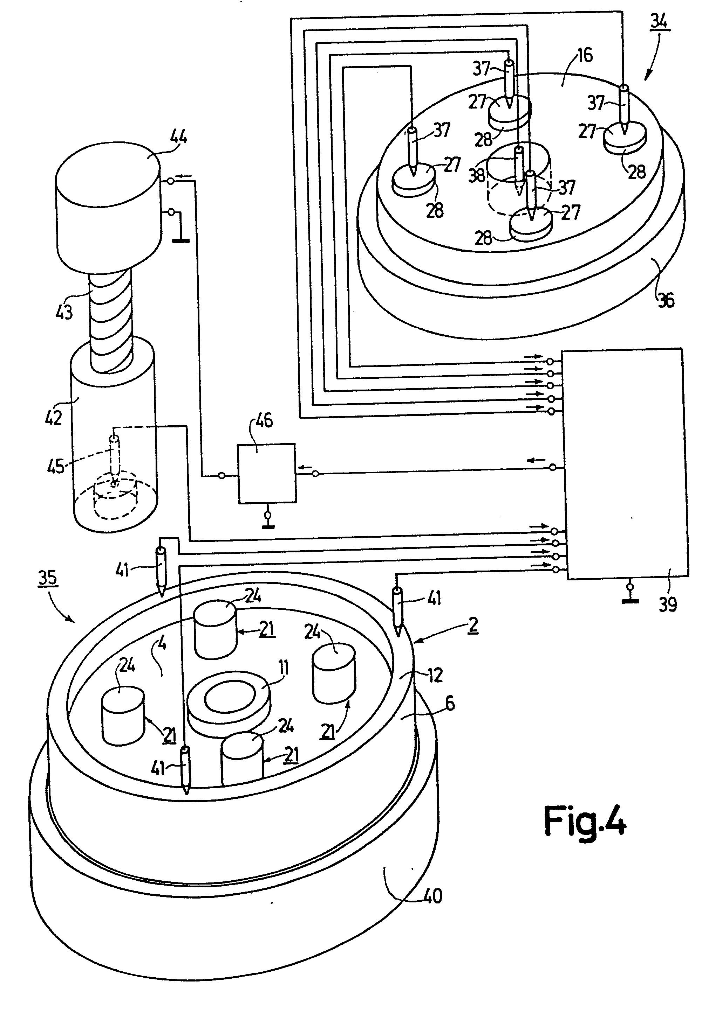

Ein derartiges Verfahren zur Anordnung einer Transformatorscheibe an einer Trommelscheibe kann hinsichtlich der erzielbaren Genauigkeit der gegenseitigen Lage der beiden Teile noch verfeinert werden, wie dies im folgenden anhand der Fig. 4 erläutert wird. Hierzu wird die mit den Gegenstücken 28 versehene Transformatorscheibe 16 in eine Meßeinrichtung 34 eingesetzt, in der die einzelnen Höhen der Gegenflächen 27 der vier vorgesehenen Gegenstücke 28 gegenüber einer Bezugsebene gemessen werden. Ebenso wird die mit den Hülsen 21 versehene Trommelscheibe 2 in eine Vorrichtung 35 eingesetzt, in der die einzelnen Höhen der aus ihr herausragenden Hülsen 21, korrespondierend zu den gemessenen Höhen der Gegenflächen 27 an der Transformatorscheibe 16, je auf ein an diese gemessenen Höhen der einzelnen Gegenflächen 27 rechnerisch angepaßtes, gegenüber einer Bezugsebene festgelegtes Sollmaß gestaucht werden. Auf diese Weise erfolgt eine Anpassung der Höhen der einzelnen Hülsen auf die Höhen der ihnen zugeordneten Gegenflächen an der Transformatorscheibe. Werden nun die Transformatorscheibe 16 und die Trommelscheibe 2 in eine Vorrichtung 30 nach Fig. 3 eingesetzt, wobei jeweils diejenige Gegenfläche 28 derjenigen Hülse 21 gegenüberliegt, die höhenmäßig an diese Gegenfläche angepasst wurde, so ist gewährleistet, daß die Abstände zwischen den Böden 24 der einzelnen Hülsen 21 gegenüber den ihnen zugeordneten Gegenflächen 27 der Gegenstücke 28 gleich groß sind, wodurch sich die daran anschließenden Schweißvorgänge mit Laserstrahlen besonders einwandfrei gestalten und eine besonders genaue Lage der Transformatorscheibe gegenüber der Trommelscheibe erreicht wird.

Die Meßeinrichtung 34 weist eine plattenförmige Auflage 36 auf, auf welche die Transformatorscheibe 16 mit ihrer von den Gegenstücken 28 abgewandten Scheibenhauptfläche aufgesetzt wird. Vier Meßtaster 37 werden je auf die Gegenflächen 27 der vier Gegenstücke 28 aufgesetzt. Ein weiterer Meßtaster 38 wird durch die zentrale Öffnung in der Transformatorscheibe 16 hindurch auf die Auflage 36 aufgesetzt. Die Auflage 36 und damit die auf ihr aufliegende Scheibenhauptfläche liegen die durch den Meßtaster 38 bestimmte Bezugsebene fest, gegenüber welcher die anderen vier Meßtaster 37 die Höhen der einzelnen Gegenflächen 27 bestimmen. Die Meßtaster, die beispielsweise induktive Meßwertgeber betätigen, liefern elektrische Ausgangssignale, die einem Rechner 39 zugeführt werden, der die einzelnen Höhen bestimmt und die diesbezüglichen Werte speichert.

Die Vorrichtung 35 weist eine Auflage 40 auf, an der korrespondierend zu den Hülsen 21 an der Trommelscheibe 2 hier nicht sichtbare Auflager vorgesehen sind, auf welche die Trommelscheibe 2 so aufgesetzt wird, daß die Bunde der Hülsen 21 auf ihnen aufliegen und von ihnen unterstützt werden. In dieser Lage der Trommelscheibe 2 sind die Böden 24 der Hülsen 21 und die Begrenzungsflächen 12 des Trommelkranzes 6 frei zugänglich. Die Begrenzungsfläche 12 des Trommelkranzes 6 wird als Bezugsebene herangezogen, gegenüber welche das Stauchen der Hülsen 21 vorgenommen wird. Festgelegt wird diese Bezugsebene durch drei Meßtaster 41, die gegeneinander winkelversetzt auf die Begrenzungsfläche 12 des Trommelkranzes 6 aufgesetzt werden. Die Meßtaster 37 liefern wieder über Meßwertgeber elektrische Ausgangssignale, die ebenfalls dem Rechner 39 zugeführt werden. Zum Stauchen der Hülsen 21 ist ein Preßkolben 42 vorgesehen, der mit einer axialen zylindrischen Vertiefung jeweils auf eine der Hülsen 21 aufsetzbar ist und der über eine Gewindespindel 43 von einem Motor 44 her so antreibbar ist, daß seine Höhenlage gegenüber der Trommelscheibe 2 verändert, wodurch die betreffende Hülse 21 dementsprechend gestaucht wird. Im Inneren des Preßkolbens 42 ist ein weiterer Meßtaster 45 untergebracht, der mit dem Boden 24 der betreffenden Hülse 21 zusammenwirkt und über einen Meßwertgeber ein elektrisches Signal liefert, das wieder dem Rechner 39 zugeführt wird. Durch Verknüpfung der Signale der Meßtaster 41 und des Signal des Meßtasters 45 bestimmt der Rechner 39 die jeweilige Höhe des Bodens 24 der Hülse 21, auf welcher der Preßkolben 42 aufsitzt, gegenüber der durch die Begrenzungsfläche 12 des Trommelkranzes 6 festgelegten Bezugsebene. Diesen Höhenwert setzt der Rechner 39 in Relation zu der gespeicherten Höhe der dieser Hülse 21 zugeordneten Gegenfläche 27 an der Transformatorscheibe 16, woraus er bestimmt, um welches Maß die Hülse 21 noch zu stauchen ist, um das gewünschte Sollmaß zu erreichen. Dieses Rechenergebnis gibt der Rechner 39 an eine Steuerschaltung 46 weiter, die den Motor 44 dementsprechend mit Energie versorgt, wodurch dann über die Gewindespindel 43 der Preßkolben 42 seinerseits dementsprechend verstellt wird. Auf diese Weise ist, ausgehend vom Meßtaster 45 zum Motor 44 hin, ein Regelkreis gebildet, der genau festlegt, daß die Hülse auf das vom Rechner ermittelte Sollmaß gestaucht wird. Dieses Sollmaß ist festgelegt durch den in Fig. 1 eingetragenen Abstand c der Scheibenhauptflächen 18 der Transformatorscheibe 16 gegenüber der Begrenzungsfläche 12 des Trommelkranzes 6 der Trommelscheibe 2 unter Berücksichtigung der jeweiligen Höhe der betreffenden Gegenfläche 27 gegenüber der Scheibenhauptfläche 18 der Transformatorscheibe 16 und des gewünschten Abstandes der Gegenfläche 27 zum Boden 24 der Hülse 21 an der Trommelscheibe 2, der bei allen vier Gegenflächen 27 und Hülsen 21 gleich groß sein soll. In analoger Weise wird das Stauchen der anderen Hülsen vorgenommen. Diese Verfahrensschritte können durch den Rechner 39 unterstützt voll automatisch durchgeführt werden.

Wie ersichtlich, ist nach dem beschriebenen Verfahren gewährleistet, daß die Transformatorscheibe 16 so an der Trommelscheibe 2 angeordnet ist, daß ihre Scheibenhauptfläche 18 exakt in einem vorgegebenen Abstand c gegenüber der Begrenzungsfläche 12 des Trommelkranzes 6 an der Trommelscheibe 2 verläuft. In analoger Weise kann die Anordnung der Transformatorscheibe 15 an der Trommelscheibe 1 erfolgen, wobei dann das Stauchen der an dieser Trommelscheibe angebrachten Hülsen gegenüber der durch die Begrenzungsfläche 13 des Trommelkranzes 5 dieser Trommelscheibe 1 festgelegten Bezugsebene erfolgt, wodurch dann gewährleistet ist, daß die Scheibenhauptfläche 17 der Transformatorscheibe 15 exakt im in Fig. 1 mit d bezeichneten Abstand gegenüber der Begrenzungsfläche 13 des Trommelkranzes 5 der Trommelscheibe 1 verläuft. Damit sind alle Voraussetzungen geschaffen, daß bei der Montage der Trommelscheibe 2 auf der Antriebswelle 10, dies unter Bildung eines Spaltes zwischen den Begrenzungsflächen 12 und 13 der beiden Trommelscheiben 2 und 1 im gewünschten Abstand a, exakt ein Abstand b zwischen den beiden Scheibenhauptflächen 17 und 18 der beiden Transformatorscheiben 15 und 16 des Ringtransformators 14 erreicht wird. Durch die hohen Genauigkeiten, die mit dem beschriebenen Verfahren erreichbar sind, lassen sich Abstände b zwischen den beiden Scheibenhauptflächen in der Größenordnung von 0,015 mm erreichen, womit die Signalübertragungen im Ringtransformator mit sehr gutem Wirkungsgrad erfolgen.

Wie aus dem Vorstehenden ersichtlich ist, besteht eine Reihe von Abwandlungen des beschriebenen Ausführungsbeispiels, ohne daß dabei der Rahmen der Erfindung verlassen wird. Dies gilt insbesondere im Hinblick auf die Ausbildung der Hülsen und der Art und Weise ihrer Anordnung an einer Trommelscheibe und der Ausbildung der Gegenflächen an einer Transformatorscheibe, das verwendete Schweißverfahren und die Ausgestaltung der Montage an sich. Selbstverständlich sind die erfindungsgemäßen Maßnahmen auch bei anders ausgebildeten Abtasteinheiten, beispielsweise mit zwei stillstehenden Trommelscheiben und einer zwischen diesen angeordneten, flachen, die Abtastelemente tragenden, rotierend antreibbaren Scheibe, anwendbar.

## Patentansprüche

1. Trommelförmige Abtasteinheit für ein Aufzeichnungs- und/oder Wiedergabegerät, über deren Mantelfläche über einen vorgegebenen Winkelbereich ein bandförmiger Aufzeichnungträger (8) schlingbar ist und die mindestens eine stillstehende (1) und eine koaxiale, rotierend antreibbare Trommelscheibe (2) und einen zweiteiligen Ringtransformator (14) aufweist, der durch zwei aus Ferritmaterial bestehende und mindestens eine Transformatorwicklung tragende Transformatorscheiben (15, 16) gebildet ist, die mit Abstand (6) zwischen ihren Scheibenhauptflächen (17, 18) einander gegenüberliegend einerseits an der rotierend antreibbaren Trommelscheibe (2) und andererseits der dieser gegenüberliegenden stillstehenden Trommelscheibe (1) koaxial angeordnet sind, wobei mindestens eine der beiden Trommelscheiben (1, 2) mit mindestens drei, einander gegenüber winkelversetzt angeordneten, achsparallelen Bohrungen (23) versehen ist, in die je ein mit der betreffenden Transformatorscheibe (15, 16) in Verbindung stehender Träger für dieselbe eingesetzt ist, dadurch gekennzeichnet, daß die Träger als aus einem schweißbaren Material bestehende, an einem Ende offene, topfförmige, mit ihren bodenseitigen Ende (24) aus der Trommelscheibe (2) herausragende Hülsen (21) ausgebildet sind, daß an der Transformatorscheibe (16), korrespondierend zu den Böden (24) der Hülsen (21) an der Trommelscheibe (2), Gegenflächen (27) vorgesehen sind, die durch mindestens ein aus einem schweißbaren Material bestehendes, an der Transformatorscheibe (16) angebrachtes Gegenstück (28) gebildet sind und daß die Böden (24) der Hülsen (21) mit den zu ihnen korrespondierenden Gegenflächen (27) verschweißt sind.

2. Abtasteinheit nach Anspruch 1, dadurch gekennzeichnet, daß zur Bildung der Gegenflächen (27) ein als Ring ausgebildetes Gegenstück (28) an der Transformatorscheibe (16) angebracht ist.

3. Abtasteinheit nach Anspruch 1, dadurch gekennzeichnet, daß zur Bildung jeder Gegenfläche (27) ein eigenes, als Plättchen ausgebildetes Gegenstück (28) an der Transformatorscheibe (16) angebracht ist.

4. Abtasteinheit nach einem der vorhergehenden Ansprüche, dadurch gekennzeichnet, daß die Hülsen (21) an ihrem offenen Ende mit einem Bund (22) versehen und lose in die Bohrungen (23) der Trommelscheibe (2) eingesetzt sind, wobei sich ihr Bund (22) von einer Seite her an der Trommelscheibe (2) abstützt und daß die Hülsen (21) in ihrem aus der Trommelscheibe (2) herausragenden Bereich (16) mit einer wulstförmigen Stauchung (25) versehen werden, die sich von der anderen Seite her an der Trommelscheibe (2) abstützt und die Hülsen (21) an der Trommelscheibe (2) fixiert.

5. Abtasteinheit nach Anspruch 4, dadurch gekennzeichnet, daß die umfangsseitige Wandung der Hülsen (21) in ihrem aus der Trommelscheibe (2) herausragenden Bereich (26) gegenüber der anderen Wandung nach innen hin verstärkt ausgebildet ist.

6. Verfahren zur Anordnung einer Transformatorscheibe (16) eines zweiteiligen Ringtransformators (14) an einer Trommelscheibe (2) einer trommelförmigen Abtasteinheit nach einem der vorhergehenden Ansprüche, dadurch gekennzeichnet, daß

a) mindestens drei aus einem schweißbaren Material bestehende, an einem Ende offene, topfförmige Hülsen (21) in einander gegenüber winkelversetzt, achsparallele Bohrungen (23) der Trommelscheibe (2) eingesetzt werden, wobei die Hülsen (21) mit ihrem bodenseitigen Ende (24) auf der Seite der Trommelscheibe (2), an die die Transformatorscheibe (16) angrenzen soll, aus der Trommelscheibe (2) herausragen, daß

b) zur Bildung von Gegenflächen (27), die den Böden (24) der Hülsen (21) an der Trommelscheibe (2) korrespondierend zugeordnet sind, die Transformatorscheibe (16) mit mindestens einem aus einem schweißbaren Material bestehenden Gegenstück (28) versehen wird, daß

c) die Trommelscheibe (2) und die Transformatorscheibe (16) in eine Vorrichtung eingesetzt werden, in der die Böden (24) der Hülsen (21) den ihnen zugeordneten Gegenflächen (27) an der Transformatorscheibe (16) mit Abstand (6) gegenüberliegen, und daß dann

d) die Böden (24) der Hülsen (21) mit den Gegenflächen (27) mittels in die Hülsen (21) von deren offenen Enden her in sie hineingerichteter Laserstrahlen (33) miteinander verschweißt werden.

7. Verfahren nach Anspruch 5, dadurch gekennzeichnet, daß nach Durchführung der Verfahrensschritte a) und b) die Transformatorscheibe (16) in eine Meßeinrichtung (30) eingesetzt wird und die Höhen der einzelnen den Böden (24) der Hülsen (21) am Träger zugeordneten Gegenflächen (27) gegenüber einer Bezugsebene gemessen werden und daß die Trommelscheibe (2) ihrerseits in eine Vorrichtung eingesetzt wird, in der die Höhen der einzelnen aus ihr herausragenden Hülsen (21), korrespondierend zu den gemessenen Höhen der einzelnen Gegenflächen (27) an der Transformatorscheibe (16), je auf ein an diese gemessene Höhen der einzelnen Gegenflächen (27) rechnerisch angepaßtes, gegenüber einer Bezugsebene festgelegtes Sollmaß gestaucht werden, wonach die Verfahrensschritte c) und d) durchgeführt werden.

**Claims**

1. A drum-shaped scanning unit for a recording and/or reproducing apparatus, around whose circumferential surface a record-carrier (8) in the form of a tape can be wrapped over a predetermined angle and which comprises at least one stationary drum section (1), a coaxial rotatable drum section (2), and a two-part rotary transformer (14) comprising two transformer discs (15, 16) which are made of a ferrite material, which carry at least one transformer winding, and which are arranged coaxially on the rotatable drum section (2) and on the facing stationary drum section (1) respectively with a clearance (b) between their major disc surfaces, at least one of the two drum sections (1, 2) being formed with at least three angularly spaced axially parallel bores (23), in each of which a supporting element for the relevant transformer disc (15, 16), to which said element is connected, is mounted, characterized in that the supporting elements are constructed as pot-shaped sleeves (21) of a weldable material, which are open at one of their ends and which are closed at their other ends (24) with which they project from the drum section (2), the transformer disc (16) is provided with mounting surface (27) which correspond to the closed ends (24) of the sleeves (21) on the drum section (2) and which are constituted by at least one mounting element (28) of a weldable material, arranged on the transformer disc (16), and the closed ends (24) of the sleeves (21) are welded to the corresponding mounting surfaces (27).

2. A scanning unit as claimed in Claim 2, characterized in that the mounting surfaces (27) are formed by an annular mounting element (28) arranged on the transformer disc (16).

3. A scanning unit as claimed in Claim 1, characterized in that each mounting surface (27) is formed by a separate disc-shaped mounting element (28) arranged on the transformer disc (16).

4. A scanning unit as claimed in any one of the preceding Claims, characterized in that the sleeves (21) comprise collars (22) at their open ends and are inserted loosely into the bores (23) in the drum section (2), so that the collars (22) rest on one side of the drum section (2) and, at the location (26) where the sleeves (21) project from the drum section (2), the sleeves are provided with circumferential ridges (25), which bear against the other side of the drum section (2) to secure the sleeves (21) to the drum section (2).

5. A scanning unit as claimed in Claim 4, characterized in that, in comparison with the other wall portions the circumferential walls of the portions (26) of the sleeves (21) which project from the drum section (2) are thickened towards the interior.

6. A method of mounting a transformer disc (16) of a twopart rotary transformer (14) on a drum section (2) of a drum-shaped scanning unit as claimed in any one of the preceding Claims, characterized in that

a) at least three pot-shaped sleeves (21) of a weldable material which are open at one end are mounted in angularly spaced axially parallel bores (23) in the drum section (2), in such a way that the closed ends (24) of the sleeves (21) project from that side of the drum section (2) which should adjoin the transformer disc (16),

b) the transformer disc (16) is provided with at least one mounting element (28) made of a weldable material to form mounting surfaces (27) corresponding to the closed ends (14) of the sleeves (21) on the drum section (2),

c) the drum section (2) and the transformer disc (16) are placed in a device, in which the closed ends (24) of the sleeves (21) are situated opposite and are spaced with a clearance (b) from the corresponding mounting surfaces (27) on the transformer disc (16), and

d) the closed ends (24) of the sleeves (21) are welded to the mounting surfaces (27) by means of laser beams (33) which are projected into the sleeves (21) through their open ends.

7. A method as claimed in Claim 5, characterized in that after steps a) and b) of the method have been carried out the transformer disc (16) is placed in a measuring device (30) to measure the height, relative to a reference plane, of the individual mounting surfaces (27) corresponding to the closed ends (24) of the sleeves (21) and the drum section (2) is placed in a device in which the heights of the individual sleeves (21) projecting from said drum section, in a manner corresponding to the measured heights of the individual mounting surfaces (27) on the transformer disc (16), are reduced to a nominal dimension relative to a reference plane, which nominal dimension has been adapted arithmetically to said measured height of each corresponding mounting surface (27), after which steps c) and d) of the method are carried out.

**Revendications**

1. Unité d'analye en forme de tambour pour un appareil d'enregistrement et/ou de reproduction autour de la surface périphérique de laquelle un support d'enregistrement (8) en forme de bande est bouclé sur un domaine angulaire prédéfini et qui comprend au moins une section de tambour fixe (1) et une section de tambour coaxiale pouvant être entraînée en rotation (2) ainsi qu'un transformateur toroïdal en deux parties (14) qui est formé de deux disques de transformateur (15, 16) en ferrite portant au moins un enroulement de transformateur, qui sont montés l'un en face de l'autre, avec un certain espacement (b) entre leurs faces principales (17, 18), coaxialement, d'une part, sur la section de tambour pouvant être entraînée en rotation (2) et, d'autre part, sur la section de tambour fixe (1) opposée à la première, au moins une des deux sections de tambour (1, 2) étant pourvue d'au moins trois forures (23) à axes parallèles décalées angulairement les unes des autres, dans chacune desquelles est inséré un support de disque de transformateur relié au disque de transformateur (15, 16) en question, caractérisée en ce qu'il est prévu que les supports soient des douilles (21) en matière soudable, ouvertes à une extrémité, en forme de cuvette et faisant saillie par leur extrémité de fond (24) hors de la section de tambour (2), que, sur le disque de transformateur (16), en correspondance avec les fonds (24) des douilles (21) sur la section de tambour (2), sont prévues des surfaces de contrepartie (27) qui sont formées par au moins une pièce de contrepartie (28) faite d'une matière soudable et fixée sur le disque de transformateur (16) et que les fonds (24) des douilles (21) sont soudés à leurs surfaces de contrepartie (27) correspondantes.

2. Unité d'analyse suivant la revendication 1, caractérisée en ce qu'une pièce de contrepartie (28) de forme annulaire est appliquée sur le disque de transformateur (16) pour former les surfaces de contrepartie (27).

3. Unité d'analyse suivant la revendication 1, caractérisée en ce que, pour la formation de chaque surface de contrepartie (27), une pièce de contrepartie proprement dite (28) en forme de plaquette est appliquée sur le disque de transformateur (16).

4. Unité d'analyse suivant l'une quelconque des revendications précédentes, caractérisée en ce que les douilles (21) sont munies d'une collerette (22) à leur extrémité ouverte et sont insérées sans serrage dans les forures (23) de la section de tambour (2), leur collerette (22) s'appuyant dans ce cas d'un côté sur la section de tambour (2), et que les douilles (21) sont pourvues, dans leur zone (26) qui dépasse de la section de tambour (2), d'un refoulement (25) en forme de bourrelet qui s'appuie de l'autre côté contre la section de tambour (2) et fixe les douilles (21) à celle-ci.

5. Unité d'analyse suivant la revendication 4, caractérisée en ce que la paroi périphérique des douilles (21), dans leur zone (26) dépassant de la section de tambour (2), est d'une configuration renforcée vers l'intérieur par rapport au reste de la paroi.

6. Procédé pour le montage d'un disque de transformateur (16) d'un transformateur toroïdal en deux parties (14) sur une section de tambour (2) d'une unité d'analyse en forme de tambour suivant l'une quelconque des revendications précédentes, caractérisé en ce que:

a) au moins trois douilles (21) en une matière soudable, ouvertes à une extrémité, en forme de cuvette sont insérées dans des forures (23) à axes parallèles de la section de tambour (2), décalées angulairement l'une de l'autre, les douilles (21) dépassant de la section de tambour (2) par leur extrémité de fond (24), du côté de la section de tambour (2) auquel le disque de transformateur (16) doit être adjacent, que

b) pour former des surfaces de contrepartie (27) qui sont associées de manière correspondante aux fonds (24) des douilles (21) sur la section de tambour (2), le disque de transformateur (16) est pourvu d'au moins une pièce de contrepartie (28) faite d'une matière soudable, que

c) la section de tambour (2) et le disque de transformateur (16) sont insérés dans un dispositif dans lequels les fonds (24) des douilles (21) sont disposés à une certaine distance (b) en face des surfaces de contrepartie (27) qui leur sont associées, sur le disque de transformateur (16), et que

d) les fonds (24) des douilles (21) sont alors soudés aux surfaces de contrepartie (27) au moyen de faisceaux laser (33) dirigés dans les douilles (21) par les extrémités ouvertes de celles-ci.

7. Procédé suivant la revendication 5, caractérisé en ce qu'après l'exécution des opérations a) et b) du procédé, le disque de transformateur (16) est inséré dans un dispositif de mesure (30) et que les hauteurs des surfaces de contrepartie (27) individuelles associées aux fonds (24) des douilles (21) sur le support sont mesurées par rapport à un plan de référence et que, par ailleurs, la section de tambour (2) est insérée dans un dispositif dans lequel les parties des douilles (21) individuelles qui en dépassent sont refoulées, en correspondance avec les hauteurs mesurées des surfaces de contrepartie (27) individuelles sur le disque de transformateur (16), chacune jusqu'à une dimension nominale fixée par rapport à un plan de référence et adaptée par calcul à ces hauteurs mesurées des surfaces de contrepartie (27) individuelles, après quoi les opérations c) et d) du procédé sont exécutées.

Fig.1

Fig.2

Fig.3

EP 0 163 329 B1

Fig.4

15